# EUROPÄISCHE PATENTSCHRIFT

(11) **EP 3 093 546 B1**
(45) Veröffentlichungstag und Bekanntmachung des Hinweises auf die Patenterteilung: **30.10.2019**
(21) Anmeldenummer: 16450009.2
(22) Anmeldetag: 14.04.2016
(51) Int. Cl.: F16L 47/02, F16L 47/08

(54) **STECKMUFFENVERBINDUNG FÜR ROHRE AUS THERMOPLASTISCHEM MATERIAL**
SOCKET JOINT FOR PIPES MADE OF THERMOPLASTIC MATERIAL
RACCORD A MANCHON POUR TUBES EN MATIERE THERMOPLASTIQUE

(30) Priorität: 16.04.2015 AT 2322015
(43) Veröffentlichungstag der Anmeldung: 16.11.2016
(73) Patentinhaber: Pipelife Austria GmbH & Co. KG, 2355 Wr. Neudorf (AT)
(72) Erfinder: Tomischek, Michael, 2392 Sulz im Wienerwald (AT); Haunschmid, Johann, 3511 Furth (AT)
(74) Vertreter: Keschmann, Marc

(56) Entgegenhaltungen:
- WO-A1-97/27418
- GB-A- 1 339 523
- US-A1- 2007 023 422

## Beschreibung

Die Erfindung betrifft eine Steckmuffenverbindung für Rohre aus thermoplastischem Material, bei der das Spitzende eines ersten Rohres in das zu einer Muffe aufgeweitete Ende eines zweiten Rohres eingesteckt ist.

Als Steckmuffenverbindung wird eine Rohrverbindung bezeichnet, deren Dichtwirkung durch Zusammenstecken von Spitzende und Muffe in Verbindung mit einem elastischen Dichtmittel erzielt wird. Rohre mit diesem Rohrverbindungstyp werden beispielsweise bei der Herstellung von Abfluss- und Abwasserleitungen verwendet. Auf Grund der einfachen Herstellung der Verbindung durch bloßes Zusammenstecken und wegen der geringen Kosten sind Steckmuffenverbindungen weit verbreitet.

Eine solche Steckmuffenverbindung für Rohre ist aus der GB 1 339 523 A bekannt.

Die WO 97/27418 A1 offenbart eine Steckverbindung zwischen einem Fitting und einem Rohr, bei der im Ringspalt zwischen dem Fitting und dem Rohr eine elektroinduktiv erwärmbare Einlage vorgesehen ist, um das Fitting und das Rohr miteinander fest zu verbinden.

Ein weiterer Vorteil der Steckmuffenverbindung ist die Möglichkeit, die Verbindung durch Auseinanderziehen ohne Mühe wieder zu lösen. Damit ist jedoch der Nachteil der fehlenden Zugsicherung verbunden. In bestimmten Einbausituationen ist eine Zugsicherung jedoch unabdingbar, um ein unbeabsichtigtes Auseinanderziehen des Rohres aus der Muffe zu verhindern. Dies stellt insbesondere bei vertikal verlegten Abflussrohren, aber auch bei Abwasserrohren oder bei Kabelschutzrohren ein Problem dar. Um eine Zugsicherung zu realisieren, wird die Steckmuffenverbindung mit mechanischen Mitteln, wie z.B. mit außen angebrachten Halteklammern zusammengehalten. Dies ist jedoch aufwändig und erfordert einen größeren Einbauraum, was bei der Verlegung von Abflussrohren im Hausinnenbereich oftmals problematisch ist. Eine andere Möglichkeit zur Zugsicherung ist die Verwendung von gesonderten Elektroschweißmuffen mit integrierter Heizwendel. Diese Lösung ist aber mit nicht unerheblichen Kosten verbunden.

Die vorliegende Erfindung zielt daher darauf ab, eine Steckmuffenverbindung zu schaffen, die bei Bedarf in einfacher Weise und zu geringen Kosten mit einer Zugsicherung versehen werden kann.

Zur Lösung dieser Aufgabe ist die Steckmuffenverbindung der eingangs genannten Art im Wesentlichen derart weitergebildet, dass im Ringspalt zwischen dem Spitzende und der Muffe eine elektroinduktiv erwärmbare Einlage angeordnet ist. Durch elektroinduktives Erwärmen der Einlage wird das thermoplastische Material der einander zugewandten Flächen des Spitzendes und der Muffe erwärmt und in einen plastischen Zustand gebracht, wodurch es zu einer Materialvereinigung kommt und ein Verschweißen der beiden Rohre erreicht wird. Die stoffschlüssige Verbindung ist nach dem Abkühlen des Materials stabil und nicht mehr ohne weiteres aufzutrennen, sodass eine Zugsicherüng erreicht wird. Die elektroinduktive Erwärmung der Einlage erfolgt in einfacher Weise dadurch, dass von außerhalb der Muffe ein elektromagnetisches Wechselfeld angelegt wird, welches in der Einlage induktiv Wirbelströme erzeugt, wodurch die Einlage erwärmt wird.

Die Einlage kann hierbei bereits werkseitig mit dem Spitzende oder der Muffe verbunden sein. Bevorzugt ist allerdings eine Ausbildung, bei der die Einlage erst anlässlich der Verbindung zweier Rohre eingeschoben oder eingelegt wird. Dies bedeutet, dass die Einlage vor dem Schweißvorgang weder mit dem Spitzende noch mit der Muffe verbunden ist. Dies hat den entscheidenden Vorteil, dass die Steckmuffenverbindung wahlweise mit Einlage oder ohne Einlage, d.h. mit Zugsicherung oder ohne Zugsicherung realisiert werden kann. Da es sich erfindungsgemäß um eine Steckmuffenverbindung handelt, ist eine stabile Rohrverbindung auch ohne elektroinduktive Verschweißung von Spitzende und Muffe gewährleistet. Lediglich für den Fall, dass eine Zugsicherung gewünscht ist, wird beim Zusammenstecken der Rohre die induktiv erwärmbare Einlage zwischengelegt.

Eine bevorzugte Ausbildung sieht vor, dass die Einlage als mit thermoplastischem Material ummantelte Metallfolie ausgebildet ist. Eine solche Ausbildung erlaubt eine besonders dünne Ausführung der Einlage, wodurch die Einlage auch bei geringer Spaltbreite des Ringspalts zwischen Spitzende und Muffe angeordnet werden kann. Insbesondere ist hierbei eine Dicke der Einlage von weniger als 0,5 mm möglich. Die Dicke der Einlage kann aber generell zwischen 0,3 und 1 mm liegen. Die Metallfolie weist bevorzugt eine Dicke von weniger als 0,3 mm auf. Die thermoplastische Beschichtung bzw. Ummantelung kann mit einer Schichtdicke von 0,1-0,3 mm ausgeführt sein. Die Metallfolie ist hierbei bevorzugt beidseitig mit dem thermoplastischen Material beschichtet. Es ist aber auch eine lediglich einseitige Beschichtung denkbar.

Dadurch, dass die Einlage mit einem thermoplastischen Material ummantelt ist, wird dieses Material bei der induktiven Erwärmung der Einlage als erstes in den plastischen Zustand übergeführt und verbindet sich dabei mit dem der Einlage zugewandten, ggf. ebenfalls plastisch gewordenen Material des Spitzendes und der Muffe. Die Ummantelung der Einlage stellt somit das Schweißmaterial für den Schweißvorgang zumindest teilweise zur Verfügung. Dabei ist bevorzugt vorgesehen, dass die Ummantelung der Metallfolie und das erste und zweite Rohr aus demselben thermoplastischen Material, insbesondere aus Polypropylen oder Polyethylen bestehen. Für den Fall, dass die zu verbindenden Rohre mehrschichtig aufgebaut sind, besteht die Ummantelung der Metallfolie und die der Einlage jeweils zugewandte Schicht des ersten und des zweiten Rohres bevorzugt aus demselben thermoplastischen Material.

Die Einlage kann entweder aus einem Endlosband abgeschnitten und im Zuge des Einlegens in die Muffe zu einem Zylinder geformt werden oder als vorgefertigter Zylinder bereitgestellt werden.

Wie bereits eingangs erwähnt, ist die erfindungsgemäße Steckmuffenverbindung eine solche, deren Dichtwirkung durch Zusammenstecken von Spitzende und Muffe in Verbindung mit einem elastischen Dichtmittel erzielt wird. Die Ausbildung ist in diesem Zusammenhang bevorzugt so getroffen, dass in eine in Umfangsrichtung verlaufende Sicke der Muffe eine über den Innenumfang der Muffe nach innen vorragende elastische Dichtung eingesetzt ist. Die -Dichtung wird beim Einstecken des Spitzendes in die Muffe somit verformt und radial nach außen komprimiert, sodass sich hierdurch die Dichtwirkung der Rohrverbindung ergibt.

Die induktiv erwärmbare Einlage ist hierbei bevorzugt in axialer Richtung zwischen der Sicke und dem freien Ende der Muffe angeordnet. Dadurch wird sichergestellt, dass die Einlage außerhalb des axialen Bereichs der Dichtung angeordnet ist, sodass die Dichtung durch den Schweißvorgang nicht beeinträchtig wird.

Alternativ ist vorgesehen, dass die Einlage in der Muffe an der dem freien Ende der Muffe abgewandten Seite der Sicke angeordnet ist.

Gemäß einem weiteren Aspekt der Erfindung wird ein Set zur Verfügung gestellt, welches ein erstes Rohr aus thermoplastischem Material mit einem Spitzende, ein zweites Rohr aus thermoplastischem Material mit einem zu einer Muffe aufgeweiteten Ende, wobei das Spitzende zur Ausbildung einer Steckmuffenverbindung in die Muffe einsteckbar ist, und eine elektroinduktiv erwärmbare Einlage, die zwischen dem Spitzende und der Muffe anordenbar ist, umfasst oder aus diesen drei Bestandteilen besteht.

Das Set erlaubt es je nach Bedarf eine herkömmliche Steckmuffenverbindung herzustellen oder durch Zwischenlegen und anschließendes Verschweißen der Einlage zusätzlich eine Zugsicherung auszubilden.

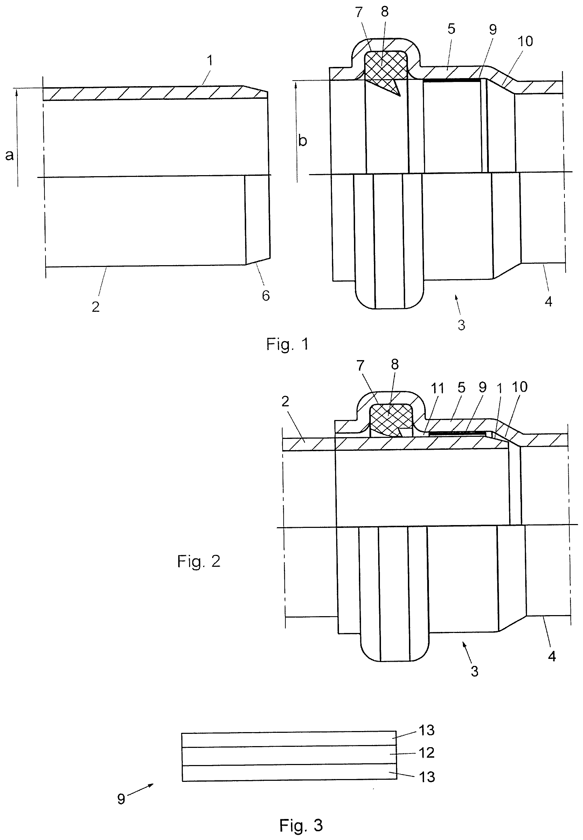

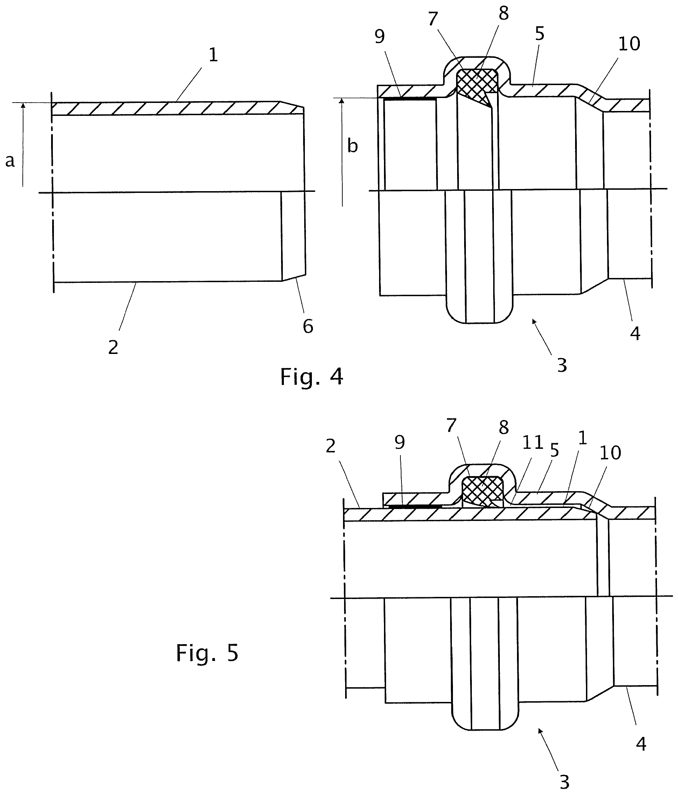

Die Erfindung wird nachfolgend anhand eines in der Zeichnung schematisch dargestellten Ausführungsbeispiels näher erläutert. In dieser zeigt Fig. 1 die zu verbindenden Rohre gemäß einer ersten Ausführungsform vor dem Zusammenstecken, Fig. 2 die Rohre gemäß Fig. 1 im zusammengesteckten Zustand, Fig. 3 eine Detailansicht der Einlage, Fig. 4 die zu verbindenden Rohre gemäß einer zweiten Ausführungsform vor dem Zusammenstecken und Fig. 5 die Rohre gemäß Fig. 4 im zusammengesteckten Zustand.

In Fig. 1 sind ein Spitzende 1 eines ersten Rohres 2 und ein eine Muffe 5 aufweisendes Muffenende 3 eines zweiten Rohres 4 jeweils im Halbschnitt dargestellt. Der Außendurchmesser a des Spitzendes 1 ist hierbei kleiner als der Innendurchmesser b der Muffe 5 ausgebildet. Um das Einschieben des Spitzendes 1 in die Muffe 5 zu erleichtern, ist das Spitzende 1 an seinem freien Ende mit einer Abschrägung 6 versehen. Die Muffe 5 weist eine Sicke 7 auf, in der eine Ringdichtung 8 angeordnet ist. Die Ringdichtung 8 ist hierbei so angeordnet oder ausgebildet, dass sie mit einem elastischen und/oder beweglichen Abschnitt über den Innendurchmesser b der Muffe 5 in das Innere der Muffe 5 vorragt. Beim Einführen des Spitzendes 1 in die Muffe 5 wird der genannte Abschnitt radial nach außen verlagert bzw. die Ringdichtung 8 radial nach außen komprimiert, sodass sich eine Dichtwirkung zwischen dem Spitzende 1 und dem Muffenende 3 ergibt.

Um bei einer solchen Steckmuffenverbindung nun eine Zugsicherung zu verwirklichen, kann vor dem Zusammenstecken der Rohre eine induktiv erwärmbare, zylinderförmige oder zu einem Zylinder gebogene Einlage 9 in die Muffe 5 eingelegt werden, und zwar zwischen der Sicke 7 und dem Übergangsabschnitt 10 am Übergang der Muffe 5 zum eigentlichen Rohr 4, d.h. an der dem freien Ende der Muffe 5 abgewandten Seite der Sicke 7. Alternativ ist es auch möglich, dass die Einlage bereits werkseitig in der Muffe 5 angeordnet ist.

In Fig. 2 ist ersichtlich, dass die Einlage 9 in einem Ringspalt 11 zwischen den einander zugewandten Flächen des Spitzendes 1 und der Muffe 5 angeordnet ist. Durch induktives Erwärmen der Einlage 9 wird diese mit den zugewandten Flächen des Spitzendes 1 und der Muffe 5 verschweißt.

In Fig. 3 ist ein Querschnitt der Einlage 9 dargestellt Es ist ersichtlich, dass die Einlage 9 aus einer Metallfolie 12 besteht, die beidseitig mit einer Schicht 13 aus thermoplastischem Material beschichtet ist. die Einlage 9 kann Durchbrechungen aufweisen um das Hindurchtreten von erweichtem thermoplastischen Material zu erlauben..

In Fig. 4 und 5 sind die Rohre gemäß einer zweiten Ausführungsform der Erfindung dargestellt. Diese unterscheidet sich von der in den Fig. 1 und 2 dargestellten Ausbildung dadurch, dass die Einlage (9) in axialer Richtung zwischen der Sicke (7) und dem freien Ende der Muffe (5), also im Muffenhals, angeordnet ist.

## Patentansprüche

1. Steckmuffenverbindung für Rohre aus thermoplastischem Material, bei der das Spitzende eines ersten Rohres in das zu einer Muffe aufgeweitete Ende eines zweiten Rohres eingesteckt ist und in eine in Umfangsrichtung verlaufende Sicke (7) der Muffe (5) eine über den Innenumfang der Muffe (5) nach innen vorragende Dichtung (8) eingesetzt ist, **dadurch gekennzeichnet, dass** im Ringspalt (11) zwischen dem Spitzende (1) und der Muffe (5) eine elektroinduktiv erwärmbare Einlage (9) angeordnet ist.

2. Steckmuffenverbindung nach Anspruch 1, **dadurch gekennzeichnet, dass** die Einlage (9) als mit thermoplastischem Material (13) ummantelte Metallfolie (12) ausgebildet ist.

3. Steckmuffenverbindung nach Anspruch 1 oder 2, **dadurch gekennzeichnet, dass** die Einlage (9) eine Dicke von weniger als 0,5 mm aufweist.

4. Steckmuffenverbindung nach einem der Ansprüche 1 bis 3, **dadurch gekennzeichnet, dass** die Einlage (9) in axialer Richtung zwischen der Sicke (7) und einem Ende der Muffe (5) angeordnet ist.

5. Steckmuffenverbindung nach einem der Ansprüche 1 bis 3, **dadurch gekennzeichnet, dass** die Einlage (9) in der Muffe (5) an der dem freien Ende der Muffe (5) abgewandten Seite der Sicke (7) angeordnet ist.

6. Steckmuffenverbindung nach einem der Ansprüche 2 bis 5, **dadurch gekennzeichnet, dass** die Ummantelung der Metallfolie (12) und das erste (2) und zweite (4) Rohr aus demselben thermoplastischen Material, insbesondere aus Polypropylen oder Polyethylen bestehen.

7. Set umfassend ein erstes Rohr (2) aus thermoplastischem Material mit einem Spitzende (1), ein zweites Rohr (4) aus thermoplastischem Material mit einem zu einer Muffe (5) aufgeweiteten Ende, wobei das Spitzende (1) zur Ausbildung einer Steckmuffenverbindung in die Muffe (5) einsteckbar ist und in eine in Umfangsrichtung verlaufende Sicke (7) der Muffe (5) eine über den Innenumfang der Muffe (5) nach innen vorragende Dichtung (8) eingesetzt ist, **dadurch gekennzeichnet, dass** das Set eine elektroinduktiv erwärmbare Einlage (9) enthält, die zwischen dem Spitzende (1) und der Muffe (5) anordenbar ist.

8. Set nach Anspruch 7, **dadurch gekennzeichnet, dass** die Einlage (9) als mit thermoplastischem Material (13) ummantelte Metallfolie (12) ausgebildet ist.

9. Set nach Anspruch 7 oder 8, **dadurch gekennzeichnet, dass** die Einlage (9) eine Dicke von weniger als 0,5 mm aufweist.

10. Set nach Anspruch 9, **dadurch gekennzeichnet, dass** die Einlage (9) eine axiale Erstreckung aufweist, die gleich oder geringer ist als der axiale Abstand zwischen der Sicke (7) und einem Ende der Muffe (5).

11. Set nach einem der Ansprüche 8 bis 10, **dadurch gekennzeichnet, dass** die Ummantelung der Metallfolie (12) und das erste (2) und zweite (4) Rohr aus demselben thermoplastischen Material, insbesondere aus Polypropylen oder Polyethylen bestehen.

## Claims

1. A socket joint for pipes made of thermoplastic material, in which the spigot end of a first pipe is plugged into the end widened to a socket, of a second pipe, and a seal (8) protruding inwardly beyond the inner circumference of the socket (5) is inserted in a circumferentially extending bead (7) of the socket (5), **characterized in that** an electroinductively heatable insert (9) is disposed in the annular gap (11) between the spigot end (1) and the socket (5).

2. A socket joint according to claim 1, **characterized in that** the insert (9) is designed as a metal film (12) jacketed with thermoplastic material (13).

3. A socket joint according to claim 1 or 2, **characterized in that** the insert (9) has a thickness of less than 0.5 mm.

4. A socket joint according to any one of claims 1 to 3, **characterized in that** the insert (9) is disposed in the axial direction between the bead (7) and an end of the socket (5).

5. A socket joint according to any one of claims 1 to 3, **characterized in that** the insert (9) is disposed in the socket (5) on the side of the bead (7) facing away from the free end of the socket (5).

6. A socket joint according to any one of claims 2 to 5, **characterized in that** the jacket of the metal film (12) and the first (2) and second (4) pipes are made of the same thermoplastic material, in particular polypropylene or polyethylene.

7. A set comprising a first pipe (2) of thermoplastic material with a spigot end (1), a second pipe (4) of thermoplastic material with an end widened to a socket (5), wherein the spigot end (1) can be plugged into the socket (5) to form a socket joint, and a seal (8) protruding inwardly beyond the inner circumference of the socket (5) is inserted in a circumferentially extending bead (7) of the socket (5), **characterized in that** the set comprises an electroinductively heatable insert (9) that can be disposed between the spigot end (1) and the socket (5).

8. A set according to claim 7, **characterized in that** the insert (9) is designed as a metal film (12) jacketed with thermoplastic material (13).

9. A set according to claim 7 or 8, **characterized in that** the insert (9) has a thickness of less than 0.5 mm.

10. A set according to any claim 9, **characterized in that** the insert (9) comprises an axial extension equal to, or smaller than, the axial distance between the bead (7) and an end of the socket (5).

11. A set according to any one of claims 8 to 10, **characterized in that** the jacket of the metal film (12) and the first (2) and second (4) pipes are made of the same thermoplastic material, in particular polypropylene or polyethylene.

## Revendications

1. Raccord à manchon pour tubes en matière thermoplastique, dans lequel l'extrémité en pointe d'un premier tube est insérée dans l'extrémité élargie en un manchon d'un second tube et un joint d'étanchéité (8) faisant saillie vers l'intérieur de la circonférence intérieure du manchon (5) est inséré dans une nervure (7) du manchon (5) s'étendant dans la direction circonférentielle, **caractérisé en ce qu'**un insert (9) pouvant être chauffé par électro-induction est agencé dans la fente annulaire (11) entre l'extrémité en pointe (1) et le manchon (5).

2. Raccord à manchon selon la revendication 1, **caractérisé en ce que** l'insert (9) est réalisé en tant que feuille métallique (12) enveloppée de matière thermoplastique (13).

3. Raccord à manchon selon la revendication 1 ou 2, **caractérisé en ce que** l'insert (9) présente une épaisseur de moins de 0,5 mm.

4. Raccord à manchon selon l'une quelconque des revendications 1 à 3, **caractérisé en ce que** l'insert (9) est agencé dans la direction axiale entre la nervure (7) et une extrémité du manchon (5).

5. Raccord à manchon selon l'une quelconque des revendications 1 à 3, **caractérisé en ce que** l'insert (9) est agencé dans le manchon (5) au niveau du côté de la nervure (7) opposé à l'extrémité libre du manchon (5).

6. Raccord à manchon selon l'une quelconque des revendications 2 à 5, **caractérisé en ce que** l'enveloppe de la feuille métallique (12) et le premier (2) et second (4) tube sont constitué par la même matière thermoplastique, en particulier par du polypropylène ou du polyéthylène.

7. Ensemble comprenant un premier tube (2) en matière thermoplastique avec une extrémité en pointe (1), un second tube (4) en matière thermoplastique avec une extrémité élargie en un manchon (5), dans lequel l'extrémité en pointe (1) est insérable pour la formation d'un raccord à manchon dans le manchon (5) et un joint d'étanchéité (8) faisant saillie vers l'intérieur de la circonférence intérieure du manchon (5) est inséré dans une nervure (7) du manchon (5) s'étendant dans la direction circonférentielle, **caractérisé en ce que** l'ensemble inclut un insert (9) pouvant être chauffé par électro-induction, qui peut être agencé entre l'extrémité en pointe (1) et le manchon (5).

8. Ensemble selon la revendication 7, **caractérisé en ce que** l'insert (9) est réalisé en tant que feuille métallique (12) enveloppée de matière thermoplastique (13).

9. Ensemble selon la revendication 7 ou 8, **caractérisé en ce que** l'insert (9) présente une épaisseur de moins de 0,5 mm.

10. Ensemble selon la revendication 9, **caractérisé en ce que** l'insert (9) présente une extension axiale, qui est inférieure ou égale à la distance axiale entre la nervure (7) et une extrémité du manchon (5).

11. Ensemble selon l'une quelconque des revendications 8 à 10, **caractérisé en ce que** l'enveloppe de la feuille métallique (12) et le premier (2) et second (4) tube sont constitués par la même matière thermoplastique, en particulier par du polypropylène ou du polyéthylène.
